(19)

Europäisches
Patentamt
European
Patent Office
Office européen
des brevets

(11)     **EP 3 790 232 B1**

(12)                **EUROPEAN PATENT SPECIFICATION**

(45) Date of publication and mention
of the grant of the patent:
**25.06.2025   Bulletin 2025/26**

(21) Application number: **19196173.9**

(22) Date of filing: **09.09.2019**

(51) International Patent Classification (IPC):
*H04L 69/28* (2022.01)       *H04L 12/413* (2006.01)
*H04L 12/40* (2006.01)       *H04L 12/44* (2006.01)
*H04J 3/06* (2006.01)        *H04Q 11/04* (2006.01)
*H04L 12/403* (2006.01)      *H04W 56/00* (2009.01)
*H04W 72/00* (2023.01)       *H04W 74/00* (2009.01)

(52) Cooperative Patent Classification (CPC):
**H04J 3/0652; H04L 12/413; H04L 69/28;
H04Q 11/04**

(54) **METHOD FOR GENERATING A SCHEDULE FOR MIXED CRITICAL COMPUTER NETWORKS**

VERFAHREN ZUR ERSTELLUNG EINES TERMINPLANS FÜR GEMISCHTE KRITISCHE
COMPUTERNETZWERKE

PROCÉDÉ DE GÉNÉRATION D'UN PROGRAMME POUR DES RÉSEAUX INFORMATIQUES
CRITIQUES MIXTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.03.2021   Bulletin 2021/10**

(73) Proprietor: **TTTech Computertechnik
Aktiengesellschaft
1040 Wien (AT)**

(72) Inventors:
• **Finzi, Anaïs
1040 Wien (AT)**
• **Craciunas, Silviu S.
1050 Wien (AT)**
• **Ramon, Serna Oliver
1210 Wien (AT)**

(74) Representative: **Patentanwaltskanzlei
Matschnig & Forsthuber OG
Biberstraße 22
Postfach 36
1010 Wien (AT)**

(56) References cited:
**GB-A- 2 390 775        KR-A- 20100 118 475
US-A1- 2003 189 922     US-A1- 2006 013 245
US-A1- 2006 242 252     US-A1- 2008 137 679
US-A1- 2019 104 055**

• **WILFRIED STEINER: "An Evaluation of SMT-
Based Schedule Synthesis for Time-Triggered
Multi-hop Networks", 2010 31ST IEEE REAL-
TIME SYSTEMS SYMPOSIUM, 1 November 2010
(2010-11-01), pages 375 - 384, XP055072111,
ISBN: 978-0-76-954298-0, DOI: 10.1109/
RTSS.2010.25**

**Description**

Field of the invention

The invention relates to a method for generating a schedule for the transmission of time-triggered, TT, messages in a network, for example in a TTEthernet or TSN network, wherein the network comprises components, for example nodes and starcouplers, wherein components of said network communicate time-triggered messages according to said schedule and based on a global, network-wide time, and wherein said components communicate rate-constrained, RC messages, wherein for each of said RC messages real-time requirements are provided.

Furthermore the invention relates to a computer network, for example a TTEthernet or TSN network, wherein the network comprises components, for example nodes and starcouplers, wherein components of said network communicate time-triggered messages according to said schedule and based on a global, network-wide time, and wherein said components communicate rate-constrained, RC messages, wherein for each of said RC messages real-time requirements are provided.

For example said components, in particular said nodes and star couplers, are arranged in a multi-hop fashion.

A computer network, for instance an IEEE 802.3 Ethernet (Institute of Electrical and Electronics Engineers 2018) or TSN (Institute of Electrical and Electronics Engineers 2017), can carry both scheduled and unscheduled communication messages, whereby scheduled communication (time-triggered or TT) messages are transmitted from a sending entity (component) to one or more receiving components (entities) at predefined points in time in a network-wide well-defined time, while unscheduled communication messages are transmitted according to other criteria. Appropriate transmission protocols and mechanisms for message handling and message prioritization can be applied, whereby it is ensured that no interference of any scheduled or unscheduled communication message with any given scheduled communication message can occur.

Non-scheduled messages can be of two types: Rate-Constrained (RC) and Best-Effort (BE). RC traffic is sent with a minimum interarrival-time called BAG (Institute of Electrical and Electronics Engineers 2018) and typically has real-time requirements on the maximum allowed end-to-end latency and jitter. BE traffic does not have any real-time requirements.

In mixed-criticality networks (i.e., networks that have TT, RC and BE traffic), the communication schedule for TT messages influences the timely behaviour of RC and BE messages due to the fact that TT messages have higher priority over RC and BE messages and are sent first, hence delaying the transmission of RC and BE messages. Hence, the TT communication schedule may adversely affect the transmission of RC messages such that they do not adhere to their real-time requirements.

Document US 2008/137679 A1 provides a method for transmitting data in messages via a communication link. Document US 2006/242252 A1 provides a scheduling algorithm for scheduling messages on a time-triggered bus in a distributed real-time embedded system, wherein an initial message schedule is determined, the algorithm using an earliest-deadline-first schedule to determine the initial message schedule. Document GB 2 390 775 A provides a packet scheduling apparatus that schedules packets on channel/s to a plurality of receivers, wherer a candidate solution is generated using a genetic algorithm.

It is an objective of the invention to generate a schedule for networks, in which at least time-triggered messages and RC messages are communicated.

This object is achieved a method as defined in claim 1, a computer network as defined in claim 10, a computer program as defined in claim 11, and a computer program product as defined in claim 12. The dependent claims define various embodiments..

Evenly space the TT transmission times may reduce the impact of TT flows on RC flows so that for example the RC worst-case end-to-end travel times (time needed for a message to go from its source to its destination) may be smaller than the deadlines.

Further combination may be realised, as described in the following:

- The transmission times of all the TT messages may be set, in particular for one TT flow after the other, using an optimization function, preferably with an SMT-solver.
- The real-time requirements for the RC messages may comprise an end-to-end delay bound, and wherein the search function in Step 2 is loop based with the following loop-steps:

  - loop-step 1: comparing the worst-case end-to-end delay bound of each RC flow with its corresponding deadline, wherein in case that the delay bound is larger than the corresponding deadline according to the RC requirements for said RC flow, the next two loop steps are executed:
  - loop step 2: identifying TT transmission times to be modified, and
  - loop step 3: computing of the transmission times of the selected TT flows in loop step 2, preferably for each output port of the flow path of a selected TT flow, for example using an optimization function within the SMT-solver.

Here, loop step 2 will help to guide the search to the most promising parts of a solution space.

If in loop step 1 the delay bound is smaller, a solution is found and the search stops.

- A record of the previously explored option can be kept, which may be used to guide the search into unexplored parts of the solution space and/or to be used as an additional stopping condition for the search.
- The search function (search algorithm) comprises an identification of TT transmission times to be modified based on a Network Calculus framework and an arrival curve in each output port, which represents the maximum amount of data that can arrive in an output port in any time interval of TT traffic detailed. This method is detailed in L. X. Zhao, H. G. Xiong, Z. Zheng, and Q. Li. *Improving worst-case latency analysis for rate-constrained traffic in the time-triggered Ethernet network.*

- A staircase curve for each output port of the network crossed by TT flows may be computed, wherein the staircase curves are approximated by linear curves, and wherein TT flows having an impact, in particular a large impact on RC flows, in particular on the real-time requirements of the RC flows, are identified by intersecting a staircase curve and its linear approximation, the flow most likely to have a large impact on RC flows is identified (see also detailed description under "findBestFlow()"). This computing is detailed for example in L. X. Zhao.

- The computation of the TT transmission times may be executed with the use of an optimization function, which preferably is added within the SMT-solver, and wherein a set of TT flows with a hyper-period, HP, which is the least common multiple of all flow periods of all TT flows, is considered, and wherein for each output port, where TT flows occur, a gain function is defined. Defining a gain function may guide the search of a good transmission time, i.e. a time which will have a low impact on RC end-to-end delays.

- For the computation of transmission times, gain functions between the already scheduled TT frames may be determined, wherein with $t^{end}_k$ being the end of a frame transmission and $t^{start}_{k+1}$ being the start of the next transmission, for each TT frame already scheduled, the gain functions are determined by:

$$\forall\, t^{end}_k \leq t < \frac{t^{end}_k + t^{start}_{k+1}}{2}\, , gain(t) = t - t^{end}_k$$

$$\forall\, t^{start}_{k+1} \geq t \geq \frac{t^{end}_k + t^{start}_{k+1}}{2}\, , gain(t) = t^{start}_{k+1} - t$$

wherein for each period of a flow of interest, preferably in each output port, the gain functions are summed and the abscise of the maximum value of the summed gains is selected, preferably by the SMT-solver, as the transmission time in the output port.

- It may be provided that only gain functions in the acceptable times are summed, and wherein the resulting summed gain functions are approximated, in each output port, in that the abscise of the maximum value of the approximated gains is selected, preferably by the SMT-solver, as the transmission time in the output port. "Acceptable" time means time intervals where no frame are already scheduled and wherein the time interval is large enough to schedule a current frame. Accordingly, only a maximum of two linear functions per interval can be kept.

In particular, the preservation of real-time properties or the fulfilling of real-time requirements refers to the guaranteed end-to-end latency for the periodic transmission of messages between one sender node and one or several receiver nodes, via well-defined communication channels, known as virtual links (VLs). The end-to-end latency is bounded if the transmission methods ensure that the messages are transmitted at their scheduled point in time (within a small deviation derived from the clock synchronization imprecision) without occurring in contention with other scheduled or unscheduled transmissions.

The second step of the proposed method (in particular the search algorithm) may relate to changing an existing schedule for TT message transmissions, whereby the changes preserve the transmissions of already scheduled TT messages and guarantee the real-time requirements of RC messages.

In the context of this text the term "transmission times" of a TT message refers to transmission points in time/transmission instants, in particular the earliest transmission instant/point in time at which said TT message is transmitted. In particular, these are the earliest starts of transmissions allowed inside an output port, meaning the transmission of a message will start as soon as possible after this point in time (the transmission can sometimes be delayed by other messages).

In particular, it is provided that (a) the transmission of TT messages does not interfere with the transmission of other already established TT message transmissions; (b) the modification will not invalidate the real-time requirements of such TT messages, and (c) the modified transmission times of such TT messages allows RC messages to meet their real-time requirements.

In the network, preferably each node is connected to at least one star coupler via a physical link. The connection is realized via physical ports on each of the devices. Nodes and star couplers have a limited number of ports, and therefore a maximum number of connecting physical links.

All nodes and star couplers share a common notion of time by means of e.g. a time synchronization protocol like, for example, SAE AS6802 (SAE International 2011) or IEEE 802.1AS (Institute of Electrical and Electronics Engineers kein Datum).

Nodes communicate to each other by exchanging periodic time-triggered (TT) messages and rate-constrained (RC) messages.

A time-triggered message, characterized by a virtual link, has the following attributes:

- A sender node
- One or several receiver nodes
- A period
- A maximum message size
- A maximum end-to-end latency

A rate-constrained message, characterized by a virtual link, has the following attributes:

- A sender node
- One or several receiver nodes
- A minimum inter-arrival time
- A maximum message size
- A maximum end-to-end latency
- A maximum jitter

The transmission of time-triggered messages may be characterized by their VLs and follows a schedule. Each VL is routed through the network. The routing process consists of finding a multi-hop network path connecting the sender node with each of the receivers (using, for example Steiner Trees [Steiner, W. 2010. "An evaluation of SMT-based schedule synthesis for time-triggered multi-hop networks." RTSS].

For each physical link on the network path, a frame may be scheduled for periodic transmission according to the respective message attributes.

Frames are scheduled sequentially such that the transmission point in time of any intermediate hop is not scheduled before the previous frame is received at the respective hop.

The schedule point in time of each frame may be an offset relative to the period, in which the frame will be transmitted. The transmissions are repeated periodically at the given offset.

The end-to-end latency is guaranteed if the last frames are received at the receiver nodes within the maximum end-to-end latency.

During operation, nodes and star couplers transmit TT frames on each link at their scheduled points in time (within a given time precision) following the schedule for the respective link.

The schedule for a link comprises the scheduled points in time for all TT frames scheduled on that link.

The schedule repeats cyclically according to the network cycle, typically the least common multiple of the periods of all VLs.

RC frames are sent whenever there is no higher-priority TT message ready to be sent. Hence the timely behaviour of RC messages is influenced by the TT transmission schedule.

The generation of a network schedule comprising the periodic transmission of frames for all virtual links satisfying their end-to-end latency and without contention is a complex operation. Therefore, it is typically calculated and distributed offline (prior to operation). This implies that the information regarding the communication needs between nodes is also available prior to operation.

The transmission of time-triggered messages per se as characterized above during operation is prior art.

Given a time-triggered computer network as described above in operation the invention for example relates to a method to identify the TT messages that adversely impact the RC message transmission and to modify the transmission times of said TT messages in order to guarantee RC real-time requirements (these requirements may comprise the end-to-end latency, and/or jitter), wherein the transmission points in time of the respective TT frames are modified without altering the real-time properties (end-to-end latency) of the already scheduled transmissions and the real-time properties of said new VLs are guaranteed.

Additionally, the invention refers to a computer program comprising program code means for performing a method according to the invention when said program is run on a computer.

Finally, the invention relates to a computer program product comprising program code means stored on a computer readable medium for performing a method according to the invention when said program product is run on a computer.

Brief Description of the Figures

In the following, in order to further demonstrate the present invention, illustrative and non-restrictive embodiments are discussed, as shown in the drawings, which show:

Fig. 1 an example of a time-triggered network,
Fig. 2 the periodic transmission of TT messages,
Fig. 3 a detailed representation of the transmission cycle depicted in Fig. 2,
Fig. 4 an example of computing of a TT flows arrival curve,
Fig. 5 the computation of gain functions,
Fig. 6 the approximation of a gain function,
Fig. 7 an example of a switch architecture,
Fig. 8 an example of a traffic model, and
Fig. 9 an example of a use case.

We discuss some of the many implementations of the invention next. If not stated otherwise, all details described in connection with a specific example are not only valid in connection with this example, but apply to the general scope of protection of the invention.

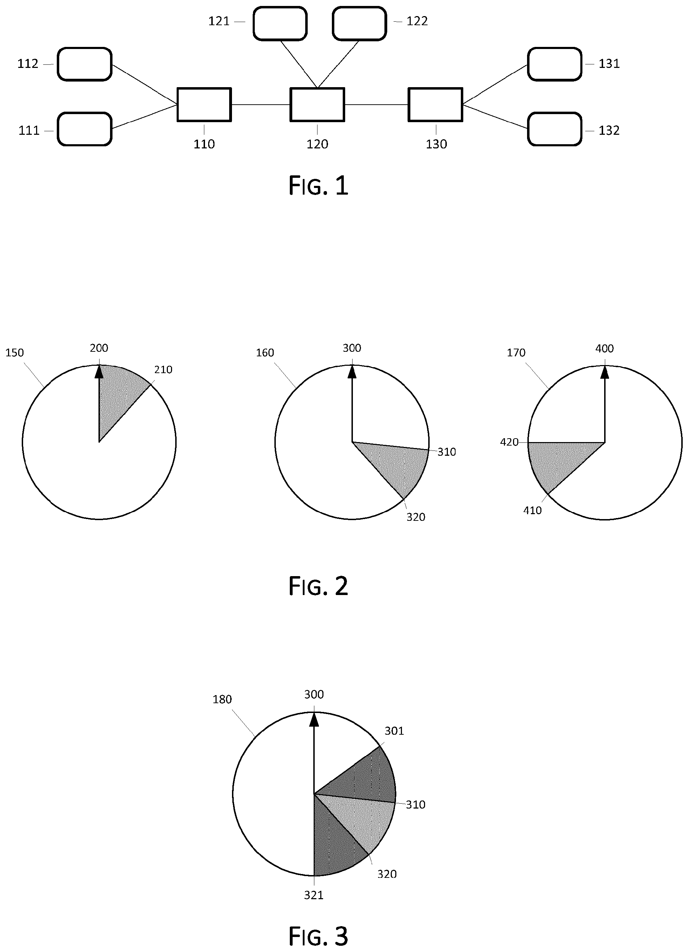

**Figure 1** shows an example of a time-triggered network which comprises or consists of three time-triggered star couplers (i.e. switches) 110, 120, and 130, and six nodes (i.e. end systems) 111, 112, 121, 122, 131, 132. All systems are connected via lines (which preferably are bidirectional) as shown in the figure and have a common time-base, for example as defined in TTEthernet (Institute of Electrical and Electronics Engineers 2018). Time-triggered (TT) messages are transmitted following a pre-configured global cyclic schedule in coexistence with other traffic (rate-constrained and best effort traffic).

A global distributed schedule determines exact points in time for the transmission of TT messages between the network systems (also denoted as "devices" or "components"; such systems are, for example, the mentioned nodes and star couplers), in a way that the transmissions through the shared lines is realized without contention. The calculation of the schedule is computationally intense, and therefore it is typically performed offline (i.e. prior to the system start-up) and distributed fully or partially to each of the systems of the network. At run-time, the global time base, within a known precision, is available to all systems, and used to execute the schedule in a cyclic and coordinated manner.

Non-scheduled traffic is transmitted during the sparse time between scheduled transmissions, in a way that the interference to scheduled transmissions is either avoided or bounded to a known maximum delay.

The transmission of scheduled messages is logically organized according to the concept of virtual links (VL). A VL defines one sender node (i.e. end system) and one or multiple receivers, as well as a physical path between them. The transmission of messages in a VL originates at the sender and propagates through the physical path (communication lines) until the receiver end system nodes are reached. Each of these propagation steps implies a scheduled transmission after the reception of the previous message. Additional constraints may be provided for VLs, for example a maximum end-to-end transmission deadline, referring to the maximum allowed interval for the propagation of messages -from sender to receiver(s).

A time-triggered message, characterized by a virtual link, has the following attributes:

- A sender node
- One or several receiver nodes
- A period
- A maximum message size
- A maximum end-to-end latency

A rate-constrained message, characterized by a virtual link, has the following attributes:

- A sender node
- One or several receiver nodes
- A minimum inter-arrival time
- A maximum message size
- A maximum end-to-end latency
- A maximum jitter

Let $vl_a$ be a TT virtual link with sender node 121 and receiver node 131 in the network depicted in Figure 1. The network path is hence composed by the sequence {121, 120, 130, 131}, as extracted from Figure 1. Let the period as well as the end-to-end delay of $vl_a$ be 100 ms.

**Figure 2** illustrates the periodic transmission of TT messages from $vl_a$ within the transmission cycles of the three nodes conforming the respective network path (subfigures 150, 160, and 170). Note that in this example only the transmission events are scheduled, hence node 131, the receiver, does not appear. Respectively, 150 represents the cyclic transmission of messages from $vl_a$ in node 121, 160 that in node 120, and 170 in node 130. Each of the subfigures represent a time cycle of 100 ms starting from the top most point in time (200, 300, and 400) and progressing clockwise. The clock is synchronized globally at every cycle; hence the time progression is homologous for all systems, within a known synchronization precision.

In essence, at time 200 a transmission event for a TT message of $vl_a$ occurs at node 121 which initiates the transmission of a message taking place until time 210. Node 120 receives the message and transmits the succeeding message at time 310, being the transmission finished by, at most, 320. Similarly, node 130 transmits a succeeding message at 410, finishing by 420. This transmission cycle repeats endlessly in a coordinated manner.

Note that event 310 can only occur after event 210, as the message transmission in node 120 directly depends on the previous reception of the message transmitted by node 121.

Analogously, event 410 depends on the occurrence of event 320. In essence, for the second and following messages propagated along the network path of a VL, the transmission can only be initiated after the previous message of the VL has arrived at the current node.

**Figure 3** provides a detailed representation of the transmission cycle depicted in Figure 2, including all other scheduled transmissions in the same communication line for node 120 (dark gray), in addition to those of $vl_a$ (light gray) already depicted in Figure 2. We observe that additional transmissions occur between events 301-310, and 320-321. Note that a transmission cycle defines the outgoing transmissions of a message towards one single communication line of the respective node (often referred as *ports*). Therefore, 180 depicts only the transmission cycle of node 120 for the communication line between nodes 120 and 130. Also note that similarly to the sequential transmissions depicted in Figure 2, the transmissions of messages shown in Figure 3 have dependencies to previous transmissions from nodes 121, 122 or 110 as part of VL paths traversing node 120.

The schedule of the TT frames on the timeline may have a major impact on the delays experienced by RC flows since TT traffic has a higher priority. Typically, the end-to-end latency of RC messages in such networks is analyzed through methods like network calculus (A. Van Bemten, W. Kellerer. 2016. Network Calculus: A Comprehensive Guide. TUM. https://mediatum.ub.tum.de/doc/1328613/1328613.pdf.). An extension of this analysis which considers the TT message schedule is presented in. A preferred timing analysis, which may be used in this invention, is based on the Network Calculus framework [L. Zhao, P. Pop, Q. Li, J. Chen, and H. Xiong, "Timing analysis of rate constrained traffic in TTEthernet using network calculus," Real-Time Systems, 2017.] which may be used to compute upper delay and backlog bounds. These bounds depend on the traffic arrival described by a so-called arrival curve $\alpha$, which represents the maximum amount of data that can arrive in any time interval, and on the resource availability described by a curve, the so-called minimum service curve $\beta$, which represents the minimum amount of data that can be sent in any time interval.

## Proposed method

The schedule of the TT frames on the timeline may have a major impact on the delays experienced by RC flows since TT traffic has a higher priority. According to the present invention it is checked that the RC end-to-end latencies computed with the current TT schedule are fulfilling the RC deadlines, using a feedback loop that preferably uses an RC network calculus analysis (A. Van Bemten, W. Kellerer. 2016. Network Calculus: A Comprehensive Guide. TUM. https://mediatum.ub.tum.de/doc/1328613/1328613.pdf.) to check that the RC end-to-end latencies computed with the current TT schedule are fulfilling the RC deadlines. If the RC latencies are larger than the RC deadlines, the problematic TT messages are rescheduled.

Evenly spacing out TT message placement may lead to a lower impact on RC message end-to-end latencies. Hence, it may be provided that an optimization metric is built that tries to evenly space out TT frames on the timeline and use optimization objectives to drive the modification of the TT message schedule.

Firstly, all the TT flows are scheduled, preferably according to said optimization metric. Secondly, an RC analysis is provided to determine if the RC traffic fulfills the deadline requirements. If this is the case, the method/algorithm stops. If this is not the case, the algorithm identifies the TT messages most likely to be causing delays and attempt to find a better offset, i.e., a modification of transmission times of identified TT messages, preferably using an optimization metric. This second step is repeated until an appropriate schedule is found or a stopping condition is reached.

The search may stop when a set of offsets fulfilling the deadline conditions is found or when the search algorithm has tried to reschedule all the possible flows without finding an unexplored set of offsets.

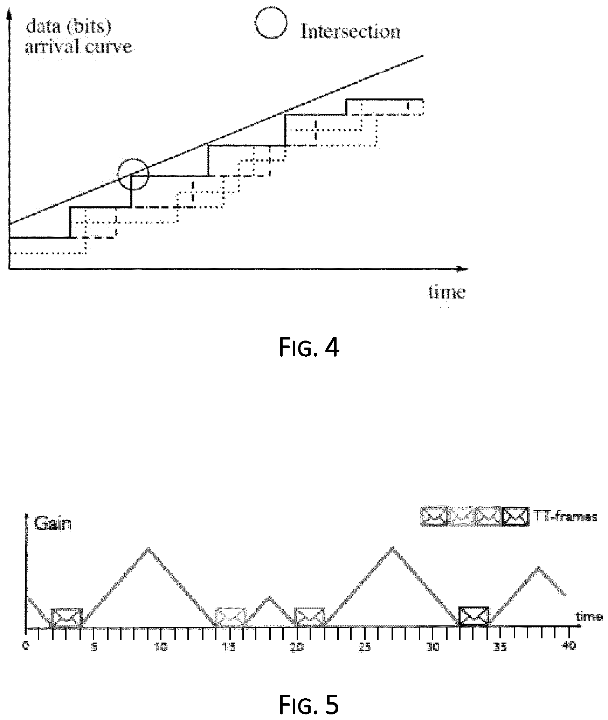

## Identification of the TT message to reschedule (Figure 4)

The impact of TT flows may be represented by an arrival curve of the TT traffic, which may be computed using formulas detailed in (L. Zhao, P. Pop, Q. Li, J. Chen, and H. Xiong, "Timing analysis of rate constrained traffic in TTEthernet using network calculus," Real-Time Systems, 2017.). The main aspect is to compute the impact of TT flows in all possible situations and keep the maximum values, as illustrated in **Figure 4.** The dotted lines in Figure 4 are the different situations and the plain line staircase represents the maximum of the dotted lines, representing the final TT flows maximum arrival curve. From this staircase arrival curve, a linear arrival curve may be approximated. The rate [the increase of the linear curve] of the linear curve is the same as the rate of the staircase curve over a period. Concerning the initial burst [the value of the linear curve at t=0] of the linear curve, it is computed such as the linear curve is always superior or equal to the staircase curve, with at least one intersection, as illustrated in Fig. 4. As a result, by modifying the value of the offset associated to the staircase intersection point, the value of the burst of the linear curve may be reduced, and consequently, the impact of TT traffic on RC flows is reduced. A so-called diversification list may be used to keep track of TT flows that have already been explored and changed in order not to run into an endless loop by trying to modify the schedule of the same TT flow(s). To select the flow most likely to have the most impact, the number of times a flow is an intersection can be computed and the flow with the most occurrences that is not in the diversification list may be selected. Finally, if no flow has been found, the first flow in the list of TT flows that is not in the diversification list will be selected.

## Generation of the TT offsets (Figure 5)

To compute the offset leading to a minimum impact of TT flows on RC flows, it may be provided that the frames are spread over a hyperperiod (that is the least common multiple of all scheduled TT message periods), in order to reduce the initial burst of the aggregated TT flows. Here, the period is 10 and the hyperperiod HP is 40.

To achieve this goal, in particular in each output port with TT flows, gain functions between the already scheduled TT frames may be defined, as illustrated in an example in Figure 5. When looking at the time-line of scheduled transmissions between 0 and the hyperperiod, we denote $t_k^{end}$ to be the end of the transmission of a TT frame and $t_{k+1}^{start}$ to be the start of the next transmission of a TT frame on the time-line. For each TT frame k already scheduled (not including the TT frames of the TT flow identified as described above, which may be denoted by TT flow i, the gain functions are determined by:

$$\forall t_k^{end} \leq t < \frac{t_k^{end} + t_{k+1}^{start}}{2}, gain(t) = t - t_k^{end}$$

$$\forall t_{k+1}^{start} \geq t \geq \frac{t_k^{end} + t_{k+1}^{start}}{2}, gain(t) = t_{k+1}^{start} - t$$

For a selected TT flow from the identification step its transmission times along the route may be modified as follows:

- the at least one, preferably all of the following correctness conditions have to be kept:

  ○ Contention-Free Constraints
  ○ Path-Dependent Constraints
  ○ Simultaneous Relay Constraints
  ○ End-to-end Transmission constraints
  ○ Application Level constraints
  ○ Protocol-Control Flow Constraints
  ○ Domain-Specific constraints

◦ An optimization condition for the frames of the identified TT flow that drive the placement of the frames to be as close as possible to the maximum gain for that frame is added.

The above conditions are described in detail in [Steiner, W. 2010. "An evaluation of SMT-based schedule synthesis for time-triggered multi-hop networks." RTSS.].

◦ Optionally, a condition for each port that the new offset is different from the old offset may be added.

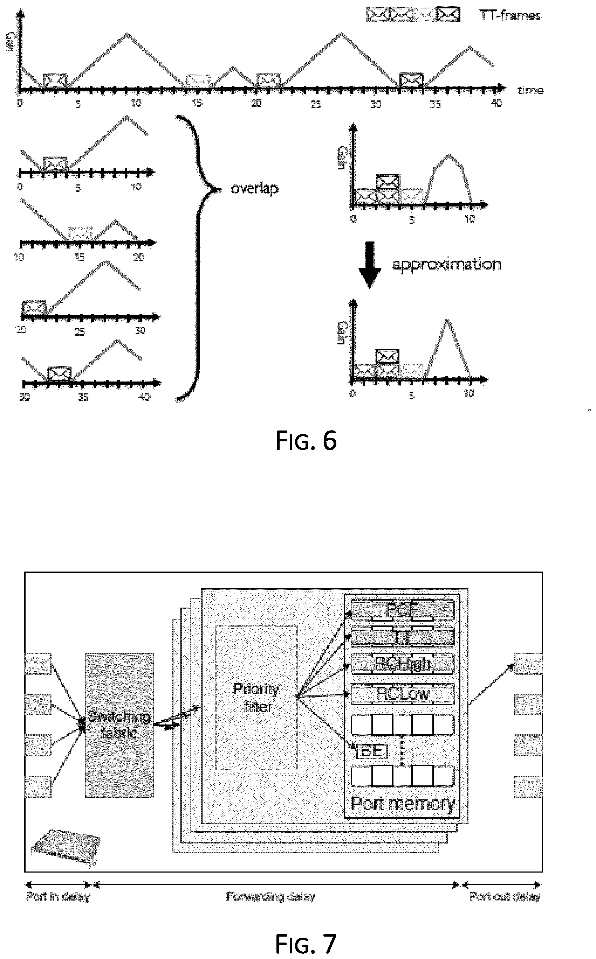

## Approximation (Figure 6)

The method presented above may require a large number of optimization functions. In between each two scheduled TT frames, a number of optimization functions is necessary to define the two linear parts of the gain, i.e., to define the upper and lower bounds of the new offset and the value associated with the gain. When the number of TT flows increases, so does the number of assertions needed, resulting in an increased runtime of the scheduler.

Accordingly, the following may be provided: only a period Ti of a flow i (the flow to be rescheduled) is considered and the values excluded by the currently scheduled frames are computed, i.e., if a frame is being transmitted, or if the inter-frame gap is too small to transmit the frame of flow i. Then, the gains, preferably only on the acceptable times, are summed up, as illustrated in **Figure 6.** Finally, to further reduce the number of linear parts of the gain function (which means reducing the number of assertions and hence the computation time), the remaining gain functions may be approximated to keep only a maximum of two linear functions per interval [between two already scheduled frames or between 0 and a frame or between a frame and the hyperperiod (in particular, between 0 and the end of the hyperperiod)], as illustrated in Fig. 6, here with Ti = 10 and hyperperiod HP = 40.

In the example described in Fig. 5 and Fig. 6, the number of assertions has been reduced from 24 to 6, which should improve the timing performances.

## DETAILED EXPLANATION OF AN EXAMPLE METHOD

In the following a concrete example of the method according the invention will be explained. All details, even if they are in the context of this example described as mandatory, may be provided or implemented in the most general scope of the invention.

### 1 Theoretical Background

### 1.1 TTEthernet

TTEthernet is an extension to standard Ethernet currently used in mixed-criticality real-time applications in the aerospace domain but also in emerging industrial automation systems. TTEthernet features three types of traffic that represent different criticality levels: TT traffic (used for highly critical traffic with guaranteed end-to-end latency and minimal jitter), RC traffic with deterministic quality of service (QoS) guarantees and non-critical traffic (i.e. BE traffic). The TTEthernet [7] standard is based on the use of global time synchronization to send Time Triggered (TT) frames at precise, predefined times (encoded in a local schedule table that is part of a globally computed schedule) to ensure the lowest contention and delays. Hence, the TT flows are defined by their size, period, and offsets (the times their transmission should start) in each output port. The synchronization flows have the highest priority in TTEthernet networks, the next priority is used by the TT flows, the two next priorities are used by the AFDX $RC_{HIGH}$ and $RC_{LOW}$ traffic, respectively, while the remaining 4 lowest priorities are reserved for Best-Effort (BE) communication (cf. Fig. 7).

### 1.2 SMT-based TTEthernet schedule synthesis

Here, we briefly describe, based on [11, 6, 10] the SMT-based approach for computing communication schedules for TTEthernet.

Satisfiability Modulo Theories (SMT) is a well-known method, similar to SAT, used to check the satisfiability of first-order logical formulas based on a background theory such as linear integer arithmetic $(\mathcal{LA}(\mathbb{Z}))$ or bit-vectors ( $\mathcal{BV}$ ) [1], [9]. Current state-of-the-art TTEthernet scheduling approaches [6], use SMT solvers for generating the static schedule by generating assertions to the context of an SMT solver representing the necessary and sufficient correctness conditions. The result of the SMT solver is a solution for the given constraints, representing values for the offsets of individual frames on each device. Additionally, modern SMT solvers like Z3 [2] offer the possibility to include optimization criteria that find the optimal solution given minimization or maximization condition(s).

Our algorithm, which builds on top of the work in [11], uses SMT solvers to find out the schedule for a network based on the inherent TTEthernet technology constraints and optional user constraints. Steiner [11] proposes an incremental backtracking algorithm, which we also implemented, that splits the scheduling problem in small increments, scheduling subsets of flows at a time. If a partial solution is found for the subset, additional frames and constraints are added until either the complete schedule is found or a solution to a partial problem cannot be found. In the case of infeasibility, the problem is backtracked and the size of the added subset is increased. In the worst case the algorithm backtracks to the root, scheduling the complete set of frames in one step. Our algorithm adds each flow from the input to the SMT context in sequence following the algorithm described in [11]. We refer the reader to [11] for a description and formalization of the correctness constraints for the SMT-based TTEthernet scheduler which we use in our method.

While the SMT-based approach retains the optimality property of SAT- or MiP-based solutions, the major downside is that the SMT solver acts as a black box and we are only able to influence it by defining constraints (assertions) and optimization criteria. Moreover, we are constrained to the expressiveness of first order logic. Hence, state-of-the-art SMT-based schedulers only take into account the TT flow constraints. As a result, the RC traffic can be strongly impacted by the placement of the scheduled TT frames and miss their required deadlines.

We propose a feedback-based approach that attempts to drive the SMT solver via optimization criteria towards placing TT frames on the timeline such that RC traffic will adhere to the latency and backlog requirements.

Please note that, while the proposed method is tailored to TTEthernet, the main feedback-based approach can also be used in Time-Sensitive Networks (TSN) which is the new standardized deterministic Ethernet solution for industrial communication systems. For TSN, existing SMT-based solutions (e.g. [10]) can be extended using our proposed method to consider AVB traffic shaped by CBS by including the network calculus-based AVB analysis results from [12].

### 1.3 Network Calculus

The timing analyses detailed in this paper are based on the Network Calculus framework [8] which is used to compute upper delay and backlog bounds. These bounds depend on the traffic arrival described by the so-called *arrival curve* $\alpha$, which represents the maximum amount of data that can arrive in any time interval, and on the resource availability described by the so-called minimum *service curve* $\beta$, which represents the minimum amount of data that can be sent in any time interval.

**Definition 1 (Arrival Curve)** *[8] A function* $\alpha(t)$ *is an arrival curve for a data flow with an input cumulative function* $A(t)$, *i.e., the number of bits received until time t, iff:*

$$\forall t, A(t) \le (A \otimes {}^1\alpha)(t)$$

**Definition 2 (Strict minimum service curve)** *[8] The function* $\beta$ *is the minimum* strict *service curve for a data flow with an output cumulative function* $A^*$, *if for any backlogged period* $]s, t]^2$: $A^*(t) - A^*(s) \ge \beta(t - s)$

To compute the main performance metrics, we need the following results:

**Theorem 1 (Performance Bounds)** *[8] Consider a flow F constrained by an arrival curve* $\alpha$ *crossing a system S that offers a minimum service curve* $\beta$. *The performance bounds obtained at any time t are:*

Backlog[3] : $\forall\ t : q(t) \le v(\alpha,\ \beta)$
Delay[4]: $\forall\ t : d(t) \le h(\alpha,\ \beta)$
Output arrival curve[5]: $\alpha^*(t) = (\alpha \oslash \beta)\ (t)$

**Theorem 2 (Concatenation-Pay Bursts Only Once)** *[8] Assume a flow crossing two servers with respective service curves* $\beta_1$ *and* $\beta_2$. *The system composed of the concatenation of the two servers offers a service curve* $\beta_1 \otimes \beta_2$.

[1]$f \otimes g(t) = \inf_{0 \le s \le t}\{f(t - s) + g(s)\}$
[2]$]s, t]$ is called backlogged period if $A(\tau) - A^*(\tau) > 0, \forall \tau \in\ ]s, t]$
[3]v: maximal vertical distance
[4]h: maximal horizontal distance
[5]$f \oslash g(t) = sup_{s \ge 0}\{f(t + s) - g(s)\}$

**Theorem 3 (Left-over service curve)** *[3] Consider a system with the strict service curve* $\beta$ *and m flows crossing it,* $f_1, f_2, .., f_m$. *The maximum packet length of fi is* $l_{i,max}$ *and* $f_i$ *is* $\alpha_i$-*constrained. The flows are scheduled by the NP-SP policy, where priority of* $f_i$ > *priority of* $f_j \Leftrightarrow i < j$. *For each* $i \in \{1, .., m\}$, *the strict service curve of* $f_i$ *is given by*[6]:

$$\left(\beta - \sum_{j<i} \alpha_j - \max_{k \geq i} l_{k,max}\right)_\uparrow$$

The traffic contracts are generally enforced using a leaky-bucket shaper, i.e., the traffic flow is $(r, b)$-constrained where $r$ and $b$ are the maximum rate and burst, and the arrival curve is $\alpha(t) = r \cdot t + b$. A common model of the minimum service curve is the rate-latency curve $\beta_{R,T}$, defined as $\beta_{R,T}(t) = R \cdot (t-T)^+$, where $R$ is the output transmission capacity, $T$ is the system latency, and $(x)^+$ denotes the maximum between $x$ and 0. The resulting output arrival curve is then: $\alpha^*(t) = r \cdot (t + T) + b$

An improvement of the leaky bucket shaper is to take into account the link capacity of the input ports in order to obtain a more accurate input arrival curve of the flows [5]. For example, a flow arriving with a maximum burst $b$ and rate $r$, from a link with a capacity $C_{in}$, has an input arrival curve $\alpha(t) = min(C_{in} \cdot t, r \cdot t + b)$.

Extensions for the RC traffic class analysis for TTEthernet that consider the impact by the TT traffic class schedule have been introduced in [14, 13, 4].

## 2 Feedback Loop

An optimal solution would be to integrate the Network Calculus framework within the SMT solver to directly consider the constraints of the RC traffic. However, this is not possible due to the non-linearity of Network Calculus. In particular, the computation of the arrival curve of TT frames as described in [14] make use of several minimizations, maximizations and upper-bound values to compute the overall arrival curve of TT flows.

The current state-of-the-art SMT-based schedulers do not consider RC flows. However, the placement of the TT frames on the timeline may have a major impact on the delays experienced by RC flows since TT traffic has a higher priority. The main idea of our proposal (described in more detail below) is to use a feedback loop that uses the RC network calculus analysis to check the TT schedule and, if necessary, reschedule problematic flows.

First all the TT flows are scheduled using the optimization function of the SMT-solver to spread the TT frames. Our observation is that evenly spacing out TT frame placement leads to a lower impact on RC flows. Hence, we build an optimization metric that tries to evenly space out TT frames on the timeline and use optimization objectives to drive the scheduling and rescheduling of TT flows via the SMT solver.

Secondly, the RC analysis is called to determine if RC traffic fulfills the deadline requirements. If this is the case, the algorithm stops. If this is not the case, the algorithm identify the flow most likely to be causing delays and attempt to find a better offset, i.e., reschedules, using the optimization function of SMT.

This second step is repeated until an appropriate schedule is found or a stopping condition is reached.

The additional advantage of such a solution is that it is complementary to the existing implementation and can be readily integrated into existing tools. It does not require [6]$g\uparrow(t) = max\{0, \sup_{0 \leq s \leq t} g(s)\}$ modification of the existing constraints, just the addition of optimization objectives and the implementation of the feedback loop.

### 2.1 General algorithm

The general algorithm is detailed in Alg. 1. To modify the values of the offsets, we propose to add an optimization constraint to the SMT scheduler, implemented in the function smtComputeOffset(flow) in Section 1.2.3. In particular, we propose two methods for the computation of the optimization function. They are detailed in Sections 1.2.4 and 1.2.5.

First, in Alg. 1, we set an initial offset for each flow (ranked from smallest to largest period) using smtComputeOffset(flow), from Line 1 to Line 3. Then, we check whether the RC deadlines are fulfilled in Line 4. If it is not the case, we attempt to modify the offset of a flow selected by the function findBestFlow() (describe in Section 1.2.2), in Lines 8 and 9.

If the new set of offsets has already been explored (Line 10), we use a while loop to explore possible offsets until all the flows have been tested or a new set has been found (Line 11). While no acceptable solution is found in Line 11, we add the flow to the diversification list, look for a new flow that is not in the diversification list, and compute the new offsets as before (Lines 12 to 15). If the new set of offsets has not already been explored, then the diversification list is reset (Lines 16 to 18). Finally, we check if the RC deadlines are now fulfilled and update the list of explored offsets (Lines 19 and 20).

| **Algorithm 1:** General algorithm |
|---|
| **Require:** $flows_{TT}, flows_{RC}$ |
| 1: **for** flow in $flows_{TT}$ **do** |
| 2:    smtComputeOffset(flow) |
| 3: **end for** |
| 4: rcDeadlinesFulfilled=computeRCDelays($flows_{RC}$) |
| 5: listExploredOffset=[] |
| 6: diversification=[] |
| 7: **while** rcDeadlinesFulfilled==False and diversification.size $<$ $flows_{TT}$.size **do** |
| 8:    flow = findBestFlow() |
| 9:    smtComputeOffset(flow) |
| 10:    **if** getCurrentOffsets() in listExploredOffset **then** |
| 11:      **while** getCurrentOffsets() in listExploredOffset and diversification.size $<$ $flows_{TT}$.size **do** |
| 12:        diversification.add(flow) |
| 13:        flow = findBestFlow(diversification) |
| 14:        smtComputeOffset(flow) |
| 15:      **end while** |
| 16:    **else** |
| 17:      diversification==[] |
| 18:    **end if** |
| 19:    rcDeadlinesFulfilled=computeRCDelays($flows_{RC}$) |
| 20:    listExploredOffset.add(getCurrentOffsets()) |
| 21: **end while** |

### 2.2 findBestFlow()

The impact of TT flows is represented by the arrival curve of the TT traffic, which is computed using the formulas detailed in [14]. The main idea is to compute the impact of TT flows in all the possible situations and keep the maximum values, as illustrated in Fig. 4. The dotted lines are the different situations and the plain line staircase is the maximum of the dotted lines, representing the final TT flows maximum arrival curve, denoted $\alpha_{TT}^{k}(t)$.

From this staircase arrival curve, we are able to approximate a linear arrival curve. The rate of the linear curve is the same as the rate of the staircase curve over a period. Concerning the initial burst of the linear curve, it is computed such as the linear curve is always superior or equal to the staircase curve, with at least one intersection, as illustrated in Fig. 4. As a result, by modifying the value of the offset associated to the staircase intersection point, we may be able to reduce the value of the burst of the linear curve, and consequently, reduce the impact of TT traffic on RC flows. The intersection points are computed within the findIntersections() function.

---

**Algorithm 2:** findBestFlow()

---

**Require:** $flows_{TT}, flows_{RC}, Data_{paths},$diversification

**Ensure:** bestFlow

1: listCard={}
2: **for** flowTT in $flows_{TT}$ **do**
3:     listCard[flowTT]=0
4: **end for**
5: **for** flowRC in $flows_{RC}$ **do**
6:     **for** path in flowRC paths **do**
7:         **for** port in path **do**
8:             flowsTTInter=findIntersections()
9:             **for** flowTT in flowsTTInter **do**
10:                 listCard[flowTT]+=1
11:             **end for**
12:         **end for**
13:     **end for**
14: **end for**
15: bestFlow=NULL
16: **if** not isEmpty(listCard) **then**
17:     bestFlow=findMaxCardinal(listCard,diversification)
18: **end if**
19: **while** bestFlow==NULL or bestFlow in diversification **do**
20:     bestFlow = $flows_{TT}$.getNext()
21: **end while**

---

To select the flow most likely to have the best impact (the algorithm is detailed in Algo. 2), we compute the number of times a flow is an intersection (from Line 5 to 14) and we select the flow with the most occurrences that is not in the diversification list, in Line 17. Finally, if no flow has been found, we select the first flow in the list of TT flows that is not in the diversification list, in Lines 19 to 21.

### 2.3 smtComputeOffset()

We consider a set of TT flows with a hyper-period *HP* (computed as the least common multiple of all flow periods). Our goal is to define the offset *x* of flow *i* with maximum frame sizes $MFS_i$ and period $T_i$. All the preexisting constraints from [11] are enforced. In this section, we only present the constraints added for the optimization of the offsets. Additionally, if the flow has already been scheduled, we also add the constraint that *x* must differ from the current offset.

We denote $C_{out}$ the capacity of the output port. For each TT frame *k* already scheduled, we define $t_k^{start}$ and $t_k^{end}$ the start and the end of the transmission. We have $m_k = \frac{t_k^{end}+t_{k+1}^{start}}{2}$ . The function newSymbolicInt() creates a symbolic variable that will be used as an unknown by the SMT solver.

In Alg. 3, for each port in each path of the TT flow *i*, we compute the constraints defining the gains, then they are added to the existing SMT constraints in Line 6. Finally offsets are computed by the SMT solver in Line 7. The computation of the new constraints in a port (i.e. Line 4) is described in Algo. 4.

---

**Algorithm 3:** Constraint computation for a path of TT flow $i$

---

**Require:** *TT flow i, path*

**Ensure:** $Offsets_i$

1: sumGain=newSymbolicInt()

2: constraints=preexisting constraints from [11]

3: **for** port in path **do**

4:     $(constraints, sumGain)$=computeConstraintInPort $(TT flow\ i, constraints,$ $sumGain, Data_{port})$

5: **end for**

6: constraints.add(maximize($sumGain$))

7: $Offsets_i$=smtSolve(constraints)

---

### 2.4 computeConstraintsInPort(): variant 1

To compute the offset leading to the minimum impact of TT flows on RC flows, we must spread the frames over the hyper-period in order to reduce the initial burst of the aggregated TT flows.

To achieve this goal, in each output port with TT flows, we define gain functions between the already scheduled TT frames, as illustrated in Fig. 5, with $T_j$ = 10 and an Hyper-period *HP* = 40. We denote $t_k^{end}$ the end of a frame transmission and $t_{k+1}^{start}$ the start of the next transmission. For each TT frame $k \neq i$ already scheduled, the gain functions are determined by:

$$\forall t_k^{end} \leq t < \tfrac{t_k^{end} + t_{k+1}^{start}}{2}, gain(t) = t - t_k^{end}$$

$$\forall t_{k+1}^{start} \geq t \geq \tfrac{t_k^{end} + t_{k+1}^{start}}{2}, gain(t) = t_{k+1}^{start} - t$$

Alg. 4 describes the definition of the gain function illustrated in Fig. 5. In particular, Line 7 defines the outer bounds of a triangle, Line 8 (resp. Line 9) defines the right (resp. left) side of the triangle.

However, this method requires a large number of assertions since SMT optimization constraints can only be defined as linear curves in $\mathcal{LA}(\mathbb{Z})$. Hence, in between two frames,

---

**Algorithm 4:** Constraint computation in a port $p$: computeConstraintsInPort()

---

**Require:** $TT\ flow\ i,\ constraints,\ sumGain,\ Data_p$

**Ensure:** $constraints,\ sumGain$

1: x= newSymbolicInt()

2: $J = \frac{HP}{T_i}$

3: **for** j in range(0,J) **do**

4: $\quad gain_j=$ newSymbolicInt()

5: $\quad$ **for** frame $k$ in TT flows **do**

6: $\quad\quad$ **if** $t_k^{end} >= j \cdot T_i$ and $t_{k+1}^{start} <= (j+1) \cdot T_i$ **then**

7: $\quad\quad\quad A = \mathrm{And}(x + j \cdot T_i + \frac{MFS_i}{C_{out}} <= t_k^{end}\ ,\ t_{k+1}^{start} <= x + j \cdot T_i)$

8: $\quad\quad\quad B = \mathrm{And}(x + j \cdot T_i >= m_k\ ,\ gain_j = t_{k+1}^{start} - x - j \cdot T_i)$

9: $\quad\quad\quad C = \mathrm{And}(x + j \cdot T_i <= m_k\ ,\ gain_j = x + j \cdot T_i - t_k^{end})$

10: $\quad\quad\quad constraints.add(\mathrm{And}(A, \mathrm{Or}(B,C)))$

11: $\quad\quad\quad sumGain+ = gain_j$

12: $\quad\quad$ **end if**

13: $\quad$ **end for**

14: **end for**

---

6 assertions are necessary to define the two linear parts of the gain, i.e., to define the upper and lower bounds of $x$ and the value associated to the gain. When the number of TT flows increases, so does the number of assertions needed, resulting in an increased runtime of the scheduler [6].

Consequently, we propose a second variant of the algorithm to reduce the number of assertions through preprocessing and hence improve the runtime of our approach.

### 2.5 computeConstraintsInPort(): variant 2

The main idea of the improvement is to consider only the period $T_i$ of the flow $i$ and compute the values excluded by the currently scheduled frames, i.e., if a frame is being transmitted, or if the inter-frame gap is too small to transmit the frame of flow $i$. Then, the gains (only on the acceptable times) are summed up, as illustrated in Fig. 6. Finally, to further reduce the number of linear parts of the gain function (which means reducing the number of assertions and hence the computation time), we approximate the remaining gain functions to keep only a maximum of two linear functions per interval, as illustrated in Fig. 6, with $T_i = 10$ and $HP = 40$.

In the example described in Fig. 5 and Fig. 6, the number of assertions has been reduced from 24 to 6, which should improve the timing performances. In the next section, we will present experimental results to validate these concepts and assess the gain in performance between the two variants.

### 3 Performance analysis

In this section, we do a performance analysis based on a real-world use-case in order to compare the two selected variants of our solution. First, we present preliminary assumptions, e.g., the model of the flow, the TTEthernet switch and end-systems, and delay computations. Then, after presenting our case study, we do a comparison of the two methods for a TTEthernet network.

### 3.1 Preliminaries and assumptions

**Switch and End-System model:** we consider the TTEthernet switch architecture described in Fig. 7. The input port delay is the amount of time necessary for a frame $i$ to arrive at a rate $C_{in}$: $\frac{MFS_i}{C_{in}}$. We consider the delay in the switch starts after the frame has been fully received. The forwarding process is defined by a minimum (best-case) and maximum (worst-case) delay, denoted $WCD_{fwd}^n$ and $BCD_{fwd}^n$, in a switch or end-system $n \in \{sw, es\}$. All the flows are using the shuffling integration policy in the switches and end-systems, i.e, the TT frames can be delayed by lower priority frames.

**TTEthernet output ports:** the impact of the TT traffic on RC traffic is computed using the input arrival curves proposed in [14]. Then, the service curves are computed using Th. 3.

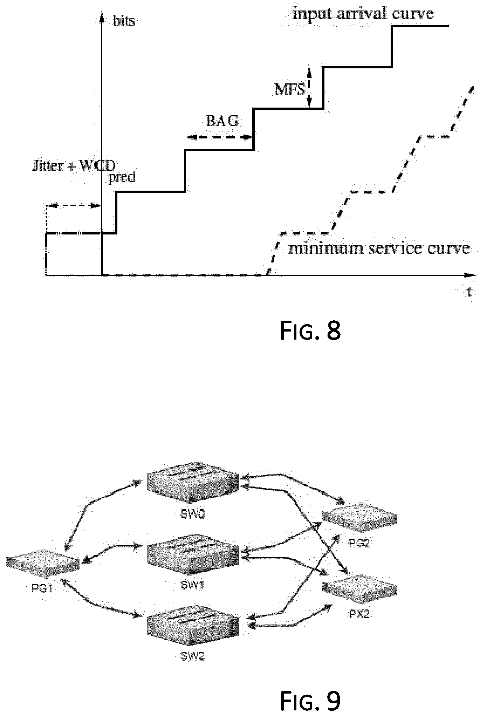

**Traffic model:** to compute the delay bounds within each node (output port, switch *sw* or end-system *es*), we use Th. 1 under the following assumptions: (i) staircase arrival curves for the traffic flows at the input of node *n*. For a flow *i*, we define the Maximum Frame Size $MFS_i$ and the Bandwidth Allocation Gap $BAG_i$ (the period and generally also the deadline). The initial arrival curve sent by the traffic source is $\alpha_I(t) = \sum_{i \in I} MFS_i \cdot \lceil \frac{t+J_i}{BAG_i} \rceil$. For each class *I*, the aggregate traffic has an input arrival curve in the node $\alpha_I^n(t) = \min\{C_{I,in}^n \cdot t, \sum_{i \in I, i \in n} \alpha_i^n(t)\}$, where the maximum input rate $C_{I,in}^n$ is the sum of the capacities $C_{in}$ of the input links of node *n* crossed by traffic of class *I*, and $\alpha_i^n(t)$ is the input arrival curve of flow *i* in node *n*. $\alpha_i^n(t)$ is a staircase curve as illustrated in Fig. 8, with $WCD_{prec}$ the delays in the previous nodes. We considered that in the generating node *n*, $C_{I,in}^n = +\infty$; (ii) the offered service curve by node *n* to the traffic class *I* is a staircase curve as illustrated in Fig. 8. This results from using Th. 3 with staircase arrival curves.

**Delay bound computation:** with this method, we can use $BCD_{fwd}^n$ to obtain a tighter input arrival curve in the output port. The input arrival curve of an aggregate flow *I* in the output port *port* in a node $n \in \{es, sw\}$ is:

$$\alpha_I^{port}(t) = \min\{C_{I,in}^n \cdot (t + \delta_{fwd}^n), \alpha_I^n(t + \delta_{fwd}^n)\}$$

with $\delta_{fwd}^n = WCD_{fwd}^n - BCD_{fwd}^n$. Then, according to Th. 1, we can compute the worst-case delay bound as the maximum horizontal distance between $\alpha_I^{port}(t)$ and $\beta_I^{port}(t) = R_I^{port} \cdot (t - T_I^{port})^+$. The delay in the switch (or end-system) n is then: $WCD_I^n = WCD_I^{port} + WCD_{fwd}^n$ and the output arrival curve is $\alpha_I^{n,*}(t) = \alpha_I^n(t + \delta_{fwd}^n + WCD_I^{port})$.

**End to end delay bounds:** finally, the end-to-end delay of a flow is obtained by summing the delays along the path in the end-systems, input ports, switches and links along the path of the flow.

### 3.2 Case Study

We consider a real-world project AERO1 [7] depicted in Fig. 9, with 3 end-systems, i.e., PG1, PG2 and PX2, and 3 switches, i.e., SW0, SW1, SW2. The forwarding delays are described in Table 1.1, and the link capacity is 100 Mbps.

We consider 12 flows for TT (resp. RC) traffic, with a redundancy level 3, i.e. 36 VLs, with identical period (resp. BAG) of 4 ms and MFS=1518 bytes. The RC traffic has a default maximum initial jitter of 100 $\mu$s. Six VLs are generated in PG1 with PG2

[7]Please note that the realistic test cases have been anonymized due to contractual obligations

Table 1.1: Forwarding delays

| Node *n* | $WCD_{fwd}^n$ (s) | $BCD_{fwd}^n$ (s) |
|---|---|---|
| End System | $2.43 \cdot 10^{-6}$ | $2.18 \cdot 10^{-6}$ |
| Switch | $2.50 \cdot 10^{-6}$ | $2.41 \cdot 10^{-6}$ |

and PX2 as destinations. The other six are generated in PG2 with PG1 and PX2 as destinations. The default deadline of a flow is equal to the period.

In order to assess both methods, we explore different scenarios by varying two parameters, i.e., the TT deadline and RC jitter, as illustrated in Table 1.2. As highlighted in the traffic model, increasing the initial jitter increases the input arrival curve of the generated traffic, resulting in the increase of the RC end-to-end delays for identical TT offsets. Consequently, increasing the RC jitter also increases the constraints on the RC deadline and delay. We choose to vary the jitter because it is a minor parameter compared to MFS and BAG, allowing us to remain close to the default scenario.

The results of various scenarios will highlight the advantages and drawbacks of each method.

We focus on the maximum number of iterations $n_{max}$, on the maximum time of execution $t_{max}$, on the iteration where the best result is found $n_{best}$, on the time necessary to find the best result $t_{best}$, and on the schedulability *sched*. We define the schedulability as the percentage of schedulable flows. Additionally, to ensure the algorithm ends within an acceptable time frame, we have added a constraint in Line 7 of Algo. 1 to limit the number of iterations to 2 000.

Table 1.2: Scenarios description

| scenario | TT deadline (s) | RC Jitter (s) |
|---|---|---|
| default | 0.004 | $100 \cdot 10^{-6}$ |
| 1.1 | 0.004 | $800 \cdot 10^{-6}$ |
| 1.2 | 0.004 | $900 \cdot 10^{-6}$ |
| 1.3 | 0.004 | $1000 \cdot 10^{-6}$ |
| 1.4 | 0.004 | $1100 \cdot 10^{-6}$ |
| 1.5 | 0.004 | $1200 \cdot 10^{-6}$ |
| 2.1 | 0.002 | $100 \cdot 10^{-6}$ |
| 2.2 | 0.002 | $300 \cdot 10^{-6}$ |
| 2.3 | 0.002 | $400 \cdot 10^{-6}$ |

**3.3 Results**

First, we compute the results of all 9 scenarios without the optimization methods, i.e., with the current implementation. Results show that the computation is done in about $t_{max}$=1.80 s and that 18 out of 36 RC VLs are not schedulable, i.e., their delay is greater than their deadline. Hence, the schedulability of RC flows is 50% without the optimization methods for all 9 scenarios.

In Table 1.3, we present the results of the scenarios finding an acceptable solution, i.e., all the RC flows are schedulable.

In Table 1.4, we present the results of scenarios not finding an acceptable solution, i.e., not all the RC flows are schedulable.

Table 1.3: Results with a schedulability of 100% for both methods

| scenario | method | $n_{max}$ | $t_{max}$ (s) |
|---|---|---|---|
| default | 1 | 1 | **101** |
| default | 2 | 1 | **2.5** |
| 1.1 | 1 | 1 | **95** |
| 1.1 | 2 | 3 | **3** |
| 1.2 | 1 | 4 | **174** |
| 1.2 | 2 | 691 | **256** |
| 1.3 | 1 | 4 | **170** |
| 1.3 | 2 | 1110 | **508** |
| 2.1 | 1 | 8 | **46** |
| 2.1 | 2 | 1 | **2.3** |
| 2.2 | 1 | 1841 | **3934** |
| 2.2 | 2 | 123 | **76** |

Table 1.4: Results without a schedulability of 100% for both methods

| scenario | method | $n_{max}$ | $t_{max}$ (s) | $n_{best}$ | $t_{best}$ (s) | sched |
|---|---|---|---|---|---|---|
| 1.4 | 1 | 55 | 604 | 55 | 604 | **100%** |
| 1.4 | 2 | 2000 | 1190 | 1053 | 616 | **83%** |
| 1.5 | 1 | 2000 | 8621 | 1 | 115 | **50%** |

(continued)

| scenario | method | $n_{max}$ | $t_{max}$ (s) | $n_{best}$ | $t_{best}$ (s) | sched |
|----------|--------|-----------|---------------|------------|----------------|-------|
| 1.5 | 2 | 2000 | 1180 | 1535 | 882 | **66%** |
| 2.3 | 1 | 2000 | **3968** | 255 | **891** | 83% |
| 2.3 | 2 | 2000 | **1023** | 660 | **350** | 83% |

First, concerning the default scenario, we can see from Table 1.3 that both methods find solutions after the first iteration ($n_{max}$ = 1). Hence, the schedulability is increased from 50% to 100%. Additionally, $t_{max}$ shows that, as expected, method 2 is faster than method 1 (up to 51 times faster in scenario 2.2), and slightly slower than the current method without the optimization.

When studying all 9 scenarios, we notice that method 1 tends to find the best solutions in less iterations (i.e. $n_{max}$ and $n_{best}$ in scenarios 1.1, 1.2, 1.3, 1.4, and 2.3), but not always (i.e. scenarios 2.1 and 2.2). This is most likely due to the approximations done on the gain functions in method 2.

However, less iterations does not necessary result in better timing performances (i.e. $t_{max}$ and $t_{best}$ in scenarios 1.1 and 2.3) because, as expected, an iteration with method 2 is faster than with method 1, e.g. about 4 times faster in scenario 2.3 and up to 40 times faster in the default scenario.

When the schedulability is not 100% with both methods (see Table 1.4), we can see that the best method, i.e. with the best schedulability, depends on the scenario: method 1 for scenario 1.4 and method 2 for scenario 1.5. This again highlights that either method can find the best offsets.

Also, it is interesting to compare the maximum time to explore all 2 000 options: in scenario 1.5, it takes $t_{max}$ = 8621s for the first method to finish, and only 1180s for method 2 to assess that no solution gives 100% schedulability. Additionally, the schedulability with method 1, i.e., the longest to finish, is lower than with method 2, i.e., the fastest method.

Finally, we can conclude that while method 1 is less complex to implement and generally finds results in less iterations, method 2 is the best method to find solutions in an acceptable time frame. Additionally, we see that our feedback-based method is able to generate schedules for TT flows such that the schedulability of RC traffic is increased for all 9 scenarios (even up to 100%).

**References**

[1] Clark Barrett, Roberto Sebastiani. Sanjit Seshia, and Cesare Tinelli. Satisfiability modulo theories. In Handbook of Satisfiability, volume 185. IOS Press, 2009.

[2] Nikolaj Bjørner, Anh-Dung Phan, and Lars Fleckenstein. vz - an optimizing SMT solver. In Proc. TACAS. Springer. 2015.

[3] Anne Bouillard. Laurent Joubet, and Eric Thierry. Service curves in Network Calculus: dos and don'ts. Research report, INRIA, 2009.

[4] M. Boyer. H. Daigmorte, N. Navet, and J. Migge. Performance impact of the interactions between time-triggered and rate-constrained transmissions in TTEthernet. In Proc. ERTS, 2016.

[5] Marc Boyer, Jörn Migge, and Nicolas Navet. An efficient and simple class of functions to model arrival curve of packetised flows. In Proc. WCTT, 2011.

[6] Silviu S. Craciunas and Ramon Serna Oliver. Combined task- and network-level scheduling for distributed time-triggered systems. Real-Time Systems, 52(2). 2016.

[7] Hermann Kopetz. Astrit Ademaj, Petr Grillinger, and Klaus Steinhammer. The Time-Triggered Ethernet (TTE) Design. Proc. ISORC, 2005.

[8] J.Y. Le Boudec and P. Thiran. Network calculus: a theory of deterministic queuing systems for the internet. Springer-Verlag, 2001.

[9] Roberto Sebastiani. Lazy satisfiability modulo theories. JSAT, 3(3-1):141-224, 2007.

[10] Ramon Serna Oliver. Silviu S. Craciunas, and Wilfried Steiner. IEEE 802.1Qbv Cate Control List Synthesis using Array Theory Encoding. In Proc. RTAS. IEEE. 2018.

[11] Wilfried Steiner. An evaluation of SMT-based schedule synthesis for time-triggered multi-hop networks. In Proc. RTSS. IEEE, 2010.

[12] L. Zhao, P. Pop, Z. Zheng, and Q. Li. Timing analysis of AVB traffic in TSN networks using network calculus. In Proc. RTAS, 2018.

[13] L. X. Zhao. H. C. Xiong, Z. Zheng, and Q. Li. Improving worst-case latency analysis for rate-constrained traffic in the time-triggered ethernet network. IEEE Communications Letters, 18(11), 2014.

[14] Luxi Zhao, Paul Pop, Qiao Li, Junyan Chen, and Hungang Xiong. Timing analysis of rate-constrained traffic in TTEthernet using network calculus. Real-Time Systems, 53(2):254-287, 2017.

**Claims**

1.  A method for generating a schedule for the transmission of flows in a network, said flows including time-triggered, TT flows, comprising TT messages, and rate-constrained, RC flows, comprising RC messages, wherein the network comprises components, and wherein the network is a time-triggered, TT, network or a time-sensitive, TSN network,

    and wherein components of said network communicate time-triggered messages according to said schedule and based on a global, network-wide time, and
    wherein said components communicate rate-constrained, RC messages, wherein for each of said RC messages real-time requirements are provided, and
    wherein for each of the RC messages, the real-time requirement provided comprise a first requirement which is a worst-case end-to-end delay bound for the transmission of the message,
    wherein the method is **characterized in that** the method comprises the steps of

    - A1: a first search of TT transmission times for TT messages, satisfying a first condition, the first condition being that TT transmission times are set for all TT messages which are communicated in the network, and
    - A2: a first determination, applied to the set of TT transmission times found during the first search, if the found set of TT transmission times satisfies a second condition, the second condition being that with the set of transmission times applied to the TT messages the real-time requirements of the messages of a first set of flows are fulfilled, wherein the first set of flows is the set of all RC flows, and

    wherein if the found set of TT transmission times does not satisfy the second condition, the step A1 that follows include steps:

    ◦ A11: a first selection of a second set of TT transmission times among the found set, the second set of TT transmission times being the TT transmission times that need to be modified in view of fulfilling the real-time requirements of the first set of flows, and
    ◦ A12: a computation of modified transmission times of the second set of TT transmission times, the result of the computation being a new set of TT transmission times fulfilling the first condition for all TT messages, and

    - A3: repetition, if the found set of TT transmission times does not satisfy the second condition, of the steps A1 to A3 until a set of transmission times is found that satisfies the second condition, and
    - A4: generation of the schedule such that the schedule includes the found set of TT transmission times.

2.  Method according to claim 1, wherein the first search, A1, includes a second selection for choosing, among a plurality of sets of TT transmission times satisfying the first condition, the one of the plurality of sets of TT transmission times satisfying the first condition that optimizes a first optimization function, wherein preferably the first optimization function is checked with a solver, for example a Satisfiability Modulo Theory, SMT, solver.

3.  Method according to claim 1 or 2, wherein the step A11 comprises the steps

    - A111: a computation of a hyper-period, HP, which is the least common multiple of all flow periods of all TT flows,

- A112: a third selection of the first set of flows on the basis of the hyper-period, and
- A113: for each output port identified as being the output port of a node of the network such that at least one of the flows of the first set of flow passes through the considered output, a computation of a gain function.

4. Method according to claim 3,

wherein the step A113 comprises steps

- A1131: the computation of gain functions for already scheduled TT frames is according to a following formula, wherein with $t^{end}_k$ denoting the end of a frame transmission and $t^{start}_{k+1\ being}$ the start of the next transmission:

$$\forall\ t^{end}_k \leq t < \frac{t^{end}_k + t^{start}_{k+1}}{2}\ , gain(t) = t - t^{end}_k$$

$$\forall\ t^{start}_{k+1} \geq t \geq \frac{t^{end}_k + t^{start}_{k+1}}{2}\ , gain(t) = t^{start}_{k+1} - t$$

and, wherein the step A12 comprises step:

- A121: for at least one of the TT flows, a computation of at least one of the TT transmission times based on the gain functions computed for the already scheduled TT frames, which step A121 comprises the steps, for each period of the considered flow and for at least one output port through which the considered flow passes:
- A1211: computing a total gain function by summing the gain function of all the flows passing through the considered output port, and
- A1212: selecting as a TT transmission time in the output port a time t0 for which the value of the total gain function is maximum over the period of the considered flow.

5. Method according to claim 4, wherein step A1211 consists of:

- A12111: computing the gain function only for a period of the considered flow, and
- A12112: approximating the total gain functions.

6. Method according to any one of the claims 1 to 5, wherein step A1 is guided by an algorithm based on a Network Calculus, NC, framework.

7. Method according to any one of the claims 1 to 6, wherein step A2 includes storing a record of the set of TT transmission times found.

8. Method according to claims 6 or 7, wherein the step A2 comprises steps:

- A21: a computation, for the found set, of a staircase curve for each output port identified as being the output port of a node of the network such that the first set of flow passes through the considered output port,
- A22: for each output port considered in step A21, an approximation of the staircase curve by a linear curve,
- A23: for each output port considered in step A21, an intersection of the staircase curve with the linear curve,
- A24: for an output port considered in step A21, determining an impact of a flow passing through the output port on the basis of the intersection of the staircase curve with the linear curve, and

wherein the first selection in step A11 includes identifying one of the flows of the first set of flows on the basis of the impact of said flow being quantified as large.

9. Method according to anyone of the claims 1 to 8, wherein the step A2 includes the step: a second determination, applied to the found set, of whether the found set of TT transmission times satisfies a third condition, the third condition being that with the set of TT transmission times applied to the messages, the worst-case end-to-end delay bound requirements of the messages of the first set of flows are fulfilled.

10. Computer network, wherein the network is a time-triggered, TT, network or a time-sensitive, TSN network, wherein said computer network comprises components,

wherein said components communicate flows including time-triggered, TT flows, comprising TT messages, and rate-constrained, RC flows, comprising RC messages,
and wherein components of said network communicate time-triggered messages according to a schedule and based on a global, network-wide time, and wherein said components communicate rate-constrained, RC messages, wherein for each of said RC messages real-time requirements are provided,
**characterized in that**
the network is adapted to include means to generate the schedule with a method according to any one of the claims 1 to 9.

11. A computer program comprising program code means for performing all steps of any one of the claims 1 to 9 when said computer program is run on a computer.

12. A computer program product comprising program code means stored on a computer readable medium for performing the method of any one of the claims 1 to 9 when said computer program product is run on a computer.

**Patentansprüche**

1. Verfahren zum Erzeugen eines Zeitplans für die Übertragung von Flüssen in einem Netzwerk, wobei die Flüsse zeitgetriggerte TT-Flüsse, die TT-Nachrichten umfassen, und ratenbeschränkte RC-Flüsse, die RC-Nachrichten umfassen, enthalten, wobei das Netzwerk Komponenten umfasst und wobei das Netzwerk ein zeitgetriggertes TT-Netzwerk oder ein zeitempfindliches TSN-Netzwerk ist und wobei Komponenten des Netzwerks zeitgetriggerte Nachrichten gemäß dem Zeitplan und basierend auf einer globalen netzwerkweiten Zeit kommunizieren, und wobei die Komponenten ratenbeschränkte RC-Nachrichten kommunizieren, Zeitplan und basierend auf einer globalen, netzwerkweiten Zeit kommunizieren, und, wobei die Komponenten ratenbeschränkte RC-Nachrichten kommunizieren, wobei für jede der RC-Nachrichten Echtzeitanforderungen bereitgestellt werden, und,

wobei für jede der RC-Nachrichten die bereitgestellte Echtzeitanforderung eine erste Anforderung umfasst, die eine Worst-Case-End-to-End-Verzögerungsgrenze für die Übertragung der Nachricht ist,
wobei das Verfahren **dadurch gekennzeichnet ist, dass** das Verfahren die folgenden Schritte umfasst:

- A1: eine erste Suche nach TT-Übertragungszeiten für TT-Nachrichten, die eine erste Bedingung erfüllen, wobei die erste Bedingung darin besteht, dass TT-Übertragungszeiten für alle TT-Nachrichten festgelegt werden, die in dem Netz kommuniziert werden, und
- A2: eine erste Bestimmung, angewandt auf den Satz von TT-Übertragungszeiten, der während der ersten Suche gefunden wurde, ob der gefundene Satz von TT-Übertragungszeiten eine zweite Bedingung erfüllt, wobei die zweite Bedingung darin besteht, dass mit dem Satz von Übertragungszeiten, die auf die TT-Nachrichten angewandt werden, die Echtzeitanforderungen der Nachrichten eines ersten Satzes von Flüssen erfüllt werden, wobei der erste Satz von Flüssen der Satz aller RC-Flüsse ist, und, wobei, wenn der gefundene Satz von TT-Übertragungszeiten die zweite Bedingung nicht erfüllt, der Schritt A1, der folgt, die Schritte umfasst:

  ◦ A11: eine erste Auswahl eines zweiten Satzes von TT-Übertragungszeiten aus dem gefundenen Satz, wobei der zweite Satz von TT-Übertragungszeiten die TT-Übertragungszeiten sind, die im Hinblick auf die Erfüllung der Echtzeitanforderungen des ersten Satzes von Flüssen geändert werden müssen, und
  ◦ A12: eine Berechnung der geänderten Sendezeiten der zweiten Menge von TT-Sendezeiten, wobei das Ergebnis der Berechnung eine neue Menge von TT-Sendezeiten ist, die die erste Bedingung für alle TT-Nachrichten erfüllt, und

- A3: Wiederholung der Schritte A1 bis A3, wenn die gefundene Menge von TT-Übertragungszeiten die zweite Bedingung nicht erfüllt, bis eine Menge von Übertragungszeiten gefunden ist, die die zweite Bedingung erfüllt, und
- A4: Erstellung des Fahrplans in der Weise, dass der Fahrplan die gefundene Menge von TT-Übertragungszeiten enthält.

**2.** Verfahren nach Anspruch 1, wobei die erste Suche, A1, beinhaltet eine zweite Auswahl für die Wahl, unter einer Vielzahl von Sets von TT-Übertragung mal die erste Bedingung erfüllt, die eine der ersten Optimierungsfunktion, vorzugsweise die erste Optimierung ist mit einem Löser, zum Beispiel eine Satisfiability Modulo Theory, SMT, solver überprüft.

**3.** Verfahren nach Anspruch 1 oder 2, wobei der Schritt A11 umfasst die Schritte

- A111: eine Berechnung einer Hyper-Periode, HP, die die mindestens mehrere aller TT fließt Perioden,
- A112: eine dritte Auswahl der ersten Reihe von fließt auf der Basis der Hyper-Periode, und
- A113: für jeden Ausgang Port identifiziert, wie die Ausgabe eines Knotens des Netzwerks, so dass mindestens eine der fließt der ersten Reihe von fließt durch die Ausgabe, eine Berechnung einer Funktion gewinnen.

**4.** Verfahren nach Anspruch 3,

wobei der Schritt A113 die Schritte

- A1131 umfasst: die Berechnung von Verstärkungsfunktionen für bereits geplante TT-Rahmen erfolgt nach der folgenden Formel, wobei $t^{ende}_k$ das Ende einer Rahmenübertragung bezeichnet und $t^{start}_{k+1}$ der Beginn der nächsten Übertragung ist:

$$\forall\, t^{ende}_k \leq t < \frac{t^{ende}_k + t^{start}_{k+1}}{2}\, , gewinn(t) = t - t^{ende}_k$$

$$\forall\, t^{start}_{k+1} \geq t \geq \frac{t^{ende}_k + t^{start}_{k+1}}{2}\, , gewinn(t) = t^{start}_{k+1} - t$$

und, wobei der Schritt A12 den Schritt:

- A121: für mindestens einen der TT-Flüsse eine Berechnung mindestens einer der TT-Übertragungszeiten auf der Grundlage der für die bereits geplanten TT-Rahmen berechneten Verstärkungsfunktionen, wobei der Schritt A121 die folgenden Schritte umfasst: für jede Periode des betrachteten Flusses und für mindestens einen Ausgangsport, durch den der betrachtete Fluss läuft:
- A1211: Berechnung einer Gesamtverstärkungsfunktion durch Summierung der Verstärkungsfunktion aller Ströme, die den betrachteten Ausgangsport passieren, und
- A1212: Auswahl eines Zeitpunkts t0 als TT-Übertragungszeit am Ausgang, für den der Wert der Gesamtverstärkungsfunktion über den Zeitraum des betrachteten Stroms maximal ist.

**5.** Verfahren nach Anspruch 4, wobei Schritt A1211 besteht aus:

- A12111: Berechnen der Verstärkungsfunktion nur für eine Periode des betrachteten Flusses, und
- A12112: Approximieren der Gesamtverstärkungsfunktionen.

**6.** Verfahren nach einem der Ansprüche 1 bis 5, wobei der Schritt A1 von einem Algorithmus geleitet wird, der auf einem Network Calculus, NC, Framework basiert.

**7.** Verfahren nach einem der Ansprüche 1 bis 6, wobei Schritt A2 das Speichern einer Aufzeichnung der Menge der gefundenen TT-Übertragungszeiten umfasst.

**8.** Verfahren nach Anspruch 6 oder 7, wobei der Schritt A2 folgende Schritte umfasst:

- A21: Berechnung einer Treppenkurve für die gefundene Menge für jeden Ausgangsport, der als Ausgangsport eines Knotens des Netzes identifiziert wurde, so dass die erste Menge des Flusses durch den betrachteten Ausgangsport verläuft,
- A22: für jeden in Schritt A21 betrachteten Ausgangsport eine Annäherung der Treppenkurve durch eine lineare Kurve,
- A23: für jeden in Schritt A21 betrachteten Ausgangsport ein Schnittpunkt der Treppenkurve mit der linearen Kurve,
- A24: für einen in Schritt A21 betrachteten Ausgangsport die Bestimmung einer Auswirkung eines Flusses, der den Ausgangsport durchläuft, auf der Grundlage des Schnittpunkts der Treppenkurve mit der linearen Kurve, und

wobei die erste Auswahl in Schritt A11 das Identifizieren eines der Flüsse des ersten Satzes von Flüssen auf der Grundlage der Auswirkung dieses Flusses, die als groß quantifiziert wird, umfasst.

9. Verfahren nach einem der Ansprüche 1 bis 8, wobei der Schritt A2 den folgenden Schritt umfasst: eine zweite Bestimmung, angewandt auf die gefundene Menge, ob die gefundene Menge von TT-Übertragungszeiten eine dritte Bedingung erfüllt, wobei die dritte Bedingung darin besteht, dass mit der auf die Nachrichten angewandten Menge von TT-Übertragungszeiten die Anforderungen an die End-zu-End-Verzögerung im schlimmsten Fall der Nachrichten der ersten Menge von Flüssen erfüllt werden.

10. Computernetzwerk, wobei das Netzwerk ein zeitgesteuertes, TT, Netzwerk oder ein zeitempfindliches, TSN, Netzwerk ist, wobei das Computernetzwerk Komponenten umfasst, wobei die Komponenten Flüsse einschließlich zeitgesteuerter, TT-Flüsse, die TT-Nachrichten umfassen, und ratenbeschränkter, RC-Flüsse, die RC-Nachrichten umfassen, kommunizieren, und wobei Komponenten des Netzwerks zeitgesteuerte Nachrichten gemäß einem Zeitplan und basierend auf einer globalen, netzwerkweiten Zeit kommunizieren, und wobei die Komponenten ratenbeschränkte RC-Nachrichten kommunizieren, wobei für jede der RC-Nachrichten Echtzeitanforderungen bereitgestellt werden,
**dadurch gekennzeichnet, dass**
das Netzwerk angepasst ist, um Mittel zum Erzeugen des Zeitplans mit einem Verfahren gemäß einem der Ansprüche 1 bis 9 zu enthalten.

11. Computerprogramm mit Programmcodemitteln zur Durchführung aller Schritte nach einem der Ansprüche 1 bis 9, wenn das Computerprogramm auf einem Computer ausgeführt wird.

12. Computerprogrammprodukt mit auf einem computerlesbaren Medium gespeicherten Programmcodemitteln zur Durchführung des Verfahrens nach einem der Ansprüche 1 bis 9, wenn das Computerprogrammprodukt auf einem Computer ausgeführt wird.


**Revendications**

1. Méthode de génération d'un calendrier pour la transmission de flux dans un réseau, lesdits flux comprenant des flux TT déclenchés par le temps, comprenant des messages TT, et des flux RC limités par le débit, comprenant des messages RC, dans lequel le réseau comprend des composants, et dans lequel le réseau est un réseau TT déclenché par le temps ou un réseau TSN sensible au temps,

et dans lequel les composants dudit réseau communiquent des messages déclenchés par le temps selon ledit calendrier et sur la base d'un temps global à l'échelle du réseau, et dans lequel lesdits composants communiquent des messages RC limités par le débit, dans lequel pour chacun desdits messages RC, des exigences en temps réel sont fournies, et dans lequel pour chacun desdits messages RC, les exigences en temps réel fournies comprennent une première exigence qui est un temps global, temps global à l'échelle du réseau, et
dans lequel lesdits composants communiquent des messages RC à débit contraint, dans lesquels pour chacun desdits messages RC des exigences en temps réel sont fournies, et
dans lequel pour chacun des messages RC, les exigences en temps réel fournies comprennent une première exigence qui est une limite de retard de bout en bout dans le pire des cas pour la transmission du message,
dans lequel la méthode est **caractérisée en ce que** la méthode comprend les étapes suivantes :

- A1 : une première recherche des délais de transmission des messages TT, satisfaisant à une première condition, la première condition étant que les délais de transmission TT sont fixés pour tous les messages TT qui sont communiqués dans le réseau, et
- A2 : une première détermination, appliquée à l'ensemble de temps de transmission TT trouvé pendant la première recherche, si l'ensemble trouvé de temps de transmission TT satisfait une deuxième condition, la deuxième condition étant qu'avec l'ensemble de temps de transmission appliqué aux messages TT, les exigences de temps réel des messages d'un premier ensemble de flux sont satisfaites, où le premier ensemble de flux est l'ensemble de tous les flux RC, et

où si l'ensemble trouvé de temps de transmission TT ne satisfait pas la deuxième condition, l'étape A1 qui suit comprend des étapes :

◦ A11 : une première sélection d'un deuxième ensemble de temps de transmission TT parmi l'ensemble trouvé, le deuxième ensemble de temps de transmission TT étant les temps de transmission TT qui doivent être modifiés en vue de satisfaire aux exigences de temps réel du premier ensemble de flux, et

◦ A12 : calcul des heures de transmission modifiées du deuxième ensemble d'heures de transmission TT, le résultat du calcul étant un nouvel ensemble d'heures de transmission TT satisfaisant à la première condition pour tous les messages TT, et

- A3 : répétition, si l'ensemble trouvé d'heures de transmission TT ne satisfait pas à la deuxième condition, des étapes A1 à A3 jusqu'à ce qu'un ensemble d'heures de transmission satisfaisant à la deuxième condition soit trouvé, et

- A4 : génération du programme de telle sorte qu'il comprenne l'ensemble trouvé d'heures de transmission TT.

2. Méthode selon la revendication 1, dans laquelle la première recherche, A1, comprend une deuxième sélection pour choisir, parmi une pluralité d'ensembles d'heures de transmission TT satisfaisant la première condition, celui de la pluralité d'ensembles d'heures de transmission TT satisfaisant la première condition qui optimise une première fonction d'optimisation, la première fonction d'optimisation étant de préférence vérifiée à l'aide d'un solveur, par exemple un solveur Satisfiability Modulo Theory (SMT).

3. Méthode selon la revendication 1 ou 2, dans lequel l'étape A11 comprend les étapes suivantes

- A111 : calcul d'une hyperpériode, HP, qui est le multiple le moins commun de toutes les périodes de flux de tous les flux TT,

- A112 : troisième sélection du premier ensemble de flux sur la base de l'hyperpériode, et

- A113 : pour chaque port de sortie identifié comme étant le port de sortie d'un nœud du réseau tel qu'au moins un des flux du premier ensemble de flux passe par la sortie considérée, calcul d'une fonction de gain.

4. Méthode selon la revendication 3,

dans lequel l'étape A113 comprend les étapes

- A1131 : le calcul des fonctions de gain pour les trames TT déjà programmées est conforme à la formule suivante, dans laquelle $t^{fin}_k$ désigne la fin de la transmission d'une trame et $t^{début}_{k+1}$ le début de la transmission suivante :

$$\forall\, t^{fin}_k \leq t < \frac{t^{fin}_k + t^{début}_{k+1}}{2}\ , gain(t) = t - t^{fin}_k$$

$$\forall\, t^{début}_{k+1} \geq t \geq \frac{t^{fin}_k + t^{début}_{k+1}}{2}\ , gain(t) = t^{début}_{k+1} - t$$

et, dans lequel l'étape A12 comprend l'étape :

- A121 : pour au moins un des flux TT, un calcul d'au moins un des temps de transmission TT basé sur les fonctions de gain calculées pour les trames TT déjà programmées, l'étape A121 comprenant les étapes suivantes, pour chaque période du flux considéré et pour au moins un port de sortie par lequel le flux considéré passe :

- A1211 : calcul d'une fonction de gain total en additionnant la fonction de gain de tous les flux passant par le port de sortie considéré, et

- A1212 : sélection d'un temps de transmission TT dans le port de sortie, un temps t0 pour lequel la valeur de la fonction de gain total est maximale sur la période du flux considéré.

5. Méthode selon la revendication 4, dans lequel l'étape A1211 consiste à :

- A12111 : calculer la fonction de gain uniquement pour une période du flux considéré, et
- A12112 : approximer les fonctions de gain totales.

6. Méthode selon l'une des revendications 1 à 5, dans laquelle l'étape A1 est guidée par un algorithme basé sur un cadre de calcul de réseau (Network Calculus, NC).

7. Méthode selon l'une des revendications 1 à 6, dans lequel l'étape A2 consiste à stocker un enregistrement de l'ensemble des heures de transmission TT trouvées.

8. Méthode selon les revendications 6 ou 7, dans laquelle l'étape A2 comprend les étapes suivantes :

- A21 : calcul, pour l'ensemble trouvé, d'une courbe en escalier pour chaque port de sortie identifié comme étant le port de sortie d'un nœud du réseau tel que le premier ensemble de flux passe par le port de sortie considéré,
- A22 : pour chaque port de sortie considéré à l'étape A21, approximation de la courbe en escalier par une courbe linéaire,
- A23 : pour chaque port de sortie considéré à l'étape A21, intersection de la courbe en escalier avec la courbe linéaire,
- A24 : pour un port de sortie considéré à l'étape A21, la détermination d'un impact d'un flux passant par le port de sortie sur la base de l'intersection de la courbe en escalier avec la courbe linéaire, et

dans lequel la première sélection à l'étape A11 comprend l'identification d'un des flux du premier ensemble de flux sur la base de l'impact de ce flux étant quantifié comme important.

9. Méthode selon l'une des revendications 1 à 8, dans lequel l'étape A2 comprend l'étape suivante : une deuxième détermination, appliquée à l'ensemble trouvé, pour savoir si l'ensemble trouvé de délais de transmission TT satisfait à une troisième condition, la troisième condition étant qu'avec l'ensemble de délais de transmission TT appliqué aux messages, les exigences de la limite de délai de bout en bout la plus défavorable des messages du premier ensemble de flux sont satisfaites.

10. Réseau informatique, dans lequel le réseau est un réseau à déclenchement temporel (TT) ou un réseau sensible au temps (TSN), dans lequel ledit réseau informatique comprend des composants,

dans lequel lesdits composants communiquent des flux comprenant des flux TT à déclenchement temporel, comprenant des messages TT, et des flux RC à débit contraint, comprenant des messages RC, et dans lequel les composants dudit réseau communiquent des messages déclenchés par le temps selon un calendrier et sur la base d'un temps global à l'échelle du réseau, et dans lequel lesdits composants communiquent des messages RC à débit limité, dans lesquels pour chacun desdits messages RC des exigences de temps réel sont fournies,
**caractérisé en ce que**
le réseau est adapté pour inclure des moyens de générer le calendrier avec une méthode selon l'une quelconque des revendications 1 à 9.

11. Programme d'ordinateur comprenant des moyens de code de programme pour exécuter toutes les étapes de l'une quelconque des revendications 1 à 9 lorsque ledit programme d'ordinateur est exécuté sur un ordinateur.

12. Produit de programme d'ordinateur comprenant des moyens de code de programme stockés sur un support lisible par ordinateur pour exécuter la méthode de l'une des revendications 1 à 9 lorsque ledit produit de programme d'ordinateur est exécuté sur un ordinateur.

FIG. 1

FIG. 2

FIG. 3

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008137679 A1
- US 2006242252 A1
- GB 2390775 A

### Non-patent literature cited in the description

- An evaluation of SMT-based schedule synthesis for time-triggered multi-hop networks. **STEINER, W.** RTSS. 2010
- **A. VAN BEMTEN** ; **W. KELLERER.** Network Calculus: A Comprehensive Guide.. *TUM.*, 2016, https://mediatum.ub.tum.de/doc/1328613/1328613.pdf.
- **L. ZHAO** ; **P. POP** ; **Q. LI** ; **J. CHEN** ; **H. XIONG**. Timing analysis of rate constrained traffic in TTEthernet using network calculus. *Real-Time Systems*, 2017
- **A. VAN BEMTEN** ; **W. KELLERER.** Network Calculus: A Comprehensive Guide.. *TUM*, 2016, https://mediatum.ub.tum.de/doc/1328613/1328613.pdf.
- **STEINER, W.** An evaluation of SMT-based schedule synthesis for time-triggered multi-hop networks. *RTSS*, 2010
- Satisfiability modulo theories. **CLARK BARRETT** ; **ROBERTO SEBASTIANI.** ; **SANJIT SESHIA** ; **CESARE TINELLI.** Handbook of Satisfiability. IOS Press, 2009, vol. 185
- vz - an optimizing SMT solver.. **NIKOLAJ BJØRNER** ; **ANH-DUNG PHAN** ; **LARS FLECKENSTEIN**. Proc. TACAS.. Springer, 2015
- **ANNE BOUILLARD.** ; **LAURENT JOUBET** ; **ERIC THIERRY**. Service curves in Network Calculus: dos and don'ts. Research report. *INRIA*, 2009
- **M. BOYER** ; **H. DAIGMORTE** ; **N. NAVET** ; **J. MIGGE.** Performance impact of the interactions between time-triggered and rate-constrained transmissions in TTEthernet. *Proc. ERTS*, 2016
- **MARC BOYER** ; **JÖRN MIGGE** ; **NICOLAS NAVET**. An efficient and simple class of functions to model arrival curve of packetised flows.. *Proc. WCTT*, 2011

- **SILVIU S.** Craciunas and Ramon Serna Oliver. Combined task- and network-level scheduling for distributed time-triggered systems.. *Real-Time Systems*, vol. 52 (2), 2016
- **HERMANN KOPETZ** ; **ASTRIT ADEMAJ** ; **PETR GRILLINGER** ; **KLAUS STEINHAMMER**. The Time-Triggered Ethernet (TTE) Design.. *Proc. ISORC*, 2005
- **J.Y. LE BOUDEC** ; **P. THIRAN**. Network calculus: a theory of deterministic queuing systems for the internet.. Springer-Verlag, 2001
- **ROBERTO SEBASTIANI.** Lazy satisfiability modulo theories.. *JSAT*, 2007, vol. 3 (3-1), 141-224
- **RAMON SERNA OLIVER.** ; **SILVIU S. CRACIUNAS** ; **WILFRIED STEINER.** IEEE 802.1Qbv Cate Control List Synthesis using Array Theory Encoding.. *Proc. RTAS. IEEE.*, 2018
- **WILFRIED STEINER.** An evaluation of SMT-based schedule synthesis for time-triggered multi-hop networks.. *Proc. RTSS. IEEE*, 2010
- **L. ZHAO** ; **P. POP** ; **Z. ZHENG** ; **Q. LI.** Timing analysis of AVB traffic in TSN networks using network calculus.. *Proc. RTAS*, 2018
- **L. X. ZHAO.** ; **H. C. XIONG** ; **Z. ZHENG** ; **Q. LI.** Improving worst-case latency analysis for rate-constrained traffic in the time-triggered ethernet network. *IEEE Communications Letters*, 2014, vol. 18 (11)
- **LUXI ZHAO** ; **PAUL POP** ; **QIAO LI** ; **JUNYAN CHEN** ; **HUNGANG XIONG.** Timing analysis of rate-constrained traffic in TTEthernet using network calculus.. *Real-Time Systems*, 2017, vol. 53 (2), 254-287